**Europäisches Patentamt**

**European Patent Office**

**Office européen des brevets**

(11) Veröffentlichungsnummer: **0 388 638 B1**

(12)

# EUROPÄISCHE PATENTSCHRIFT

(45) Veröffentlichungstag der Patentschrift: **30.11.94**

(51) Int. Cl.5: **C08G 73/16**, C09J 179/08

(21) Anmeldenummer: **90103125.2**

(22) Anmeldetag: **19.02.90**

(54) **Imidgruppen enthaltende Polyesteramide, Verfahren zu ihrer Herstellung und ihre Verwendung als Schmelzklebstoffe.**

(30) Priorität: **18.03.89 DE 3909051**

(43) Veröffentlichungstag der Anmeldung:
**26.09.90 Patentblatt 90/39**

(45) Bekanntmachung des Hinweises auf die
Patenterteilung:
**30.11.94 Patentblatt 94/48**

(84) Benannte Vertragsstaaten:
**BE DE ES FR GB IT NL SE**

(56) Entgegenhaltungen:
**US-A- 3 652 471**
**US-A- 4 505 986**
**US-A- 4 732 966**

(73) Patentinhaber: **Witco GmbH**
**Postfach 1620**
**D-59180 Bergkamen (DE)**

(72) Erfinder: **Bolze, Manfred**
**Rotherbachstrasse 39 b**
**D-4709 Bergkamen-Oberaden (DE)**
Erfinder: **Drawert, Manfred, Dr.**
**Alte Kreisstrasse 13**
**D-5758 Fröndenberg (DE)**

**Beschreibung**

Gegenstand der Erfindung sind Polyesteramidimide, herstellbar durch Kondensation von dimerisierter Fettsäure und gegebenenfalls geradkettigen aliphatischen und/oder aromatischen Dicarbonsäuren mit 6 - 13 Kohlenstoffatomen und Trimellitsäureanhydrid und aliphatischen Diaminen mit 2 - 12 Kohlenstoffatomen und 3(4),8(9)-Dihydroxymethyl-tricyclo[5.2.1.0$^{2,6}$]decan und/oder 1,4-Dihydroxymethyl-cyclohexan.

Schmelzklebstoffe auf Basis von Polyesteramiden neigen zu einer mehr oder weniger starken Aufnahme von Feuchtigkeit, welche beim Granulierungsprozeß oder bei der Lagerung aus der Luft aufgenommen werden kann.

Dies trifft sogar für Schmelzklebstoffe zu, welche unter Mitverwendung langkettiger hydrophober ein- oder mehrbasischer Fettsäuren bzw. ein- oder mehrwertiger Fettamine hergestellt werden.

Die aufgenommenen Feuchtigkeitsmengen dieser Schmelzklebstoffe liegen in der Regel zwischen ca. 0,1 bis 3 Gew.-%, überwiegend jedoch im Bereich von ca. 0,3 - 1 Gew.-%. Selbst bei Aufnahme geringer Feuchtigkeitsmengen tritt bei der Verarbeitung mittels der auf dem Schmelzklebersektor üblichen Aufschmelz- und Auftragsgeräten eine deutliche Schaumbildung auf, welche die Förderung in den Auftragsapparaturen und eine einwandfreie Applikation des Schmelzklebstoffes stark behindert.

Weiterhin können beim Erkaltungsprozeß in der Klebfuge eingeschlossene Blasen Kohäsion und Adhäsion schwächen.

In der Praxis müssen daher entsprechende Vorsorgemaßnahmen getroffen werden, die insbesondere den Granulierungsprozeß und die Verpackung betreffen. Als feuchtigkeitsdichte Verpackungen werden üblicherweise Polyethylenfolien, Aluminiumfolien, feuchtigkeitsversiegelte Papiere eingesetzt.

Trotzdem ist eine Feuchtigkeitsaufnahme bei der Verarbeitung vor Ort möglich, wenn die Gebinde in angebrochenem Zustand gelagert werden müssen. Von den Herstellern werden daher die Kunden in den Verarbeitungsvorschriften auf dieses Problem hingewiesen mit der Empfehlung, angebrochene Gebinde wieder sorgfältig zu verschließen oder schnellstens zu verarbeiten.

Aufgabe der vorliegenden Erfindung war es, diese Nachteile des Standes der Technik zu überwinden und Schmelzklebstoffe zu entwickeln, welche beim Wiederaufschmelzen und in den üblichen Förder- und Auftragsgeräten nicht zur Schaumentwicklung neigen.

Diese Aufgabe wird durch die erfindungsgemäßen Schmelzklebstoffe von Polyesteramidimiden gelöst.

Gegenstand der vorliegenden Erfindung sind daher Polyesteramidimide, herstellbar durch Kondensation von

1. 0,1 - 0,95 Äquivalenten polymerisierter Fettsäure, die erhalten wird aus einbasischen aliphatischen Säuren mit 8 - 22 Kohlenstoffatomen, mit Dimergehalten von 55 - 100 %, welche gegebenenfalls hydriert sein kann

2. 0 - 0,85 Äquivalenten einer Dicarbonsäure der allgemeinen Formel I

$$R^2\text{-OOC-}R^1\text{-COO}R^2 \qquad (I)$$

in welcher $R^1$ ein geradkettiger aliphatischer, ein cycloaliphatischer, aromatischer oder araliphatischer Kohlenwasserstoffrest mit 4 - 11 Kohlenstoffatomen und $R^2$ Wasserstoff oder ein Alkylrest mit 1 - 8 Kohlenstoffatomen sein kann und

4. 0,4 - 0,7 Äquivalenten geradzahliger aliphatischer Diamine mit 2 - 12 Kohlenstoffatomen und

5. 0,3 - 0,6 Äquivalenten 3(4),8(9)−Dihydroxymethyl-tricyclo[5.2.1.0$^{2,6}$]decan und/oder 1,4-Dihydroxymethyl-cyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist.

Ein weiterer Gegenstand der Erfindung ist ein Verfahren zur Herstellung der Polyesteramidimide durch Kondensation der Komponenten unter an sich bekannten Bedingungen.

Ein weiterer Gegenstand der Erfindung ist die Verwendung der Polyesteramidimide als Schmelzklebstoffe, Beschichtungs- und Vergußmassen.

Die erfindungsgemäßen Polyesteramidimide neigen nach der Lagerung an der Luft unter normalen Bedingungen auch über einen Zeitraum von mehreren Monaten nicht zur Schaumbildung, wenn sie in den auf dem Schmelzklebersektor üblichen Aufschmelz- und Auftragsgeräten aufgeschmolzen bzw. verarbeitet werden. Sie weisen weiterhin eine gute Benzin- und Ölbeständigkeit sowie eine exzellente Haftung an Kautschuken, Polyvinylchlorid, Acrylnitril-Butadien-Styrol Copolymerisaten, faserverstärkten Kunststoffen sowie an Metallen wie Eisen, Kupfer, Aluminium oder Zink auf, wobei aufgrund ihrer geringen Neigung zur Nachkristallisation keine Verminderung der Anfangsklebkraft zu befürchten ist.

Die zur Herstellung der Polyesteramidimide mitverwendeten dimeren Fettsäuren haben Dimergehalte zwischen 55 - 100 %, vorzugsweise 70 - 96 %.

Der Ausdruck dimerisierte Fettsäure bezieht sich in allgemeiner Form auf polymerisierte Säuren, die aus "Fettsäuren" erhalten werden. Der Ausdruck "Fettsäure" umfaßt ungesättigte natürliche und synthetische einbasische alipha tische Säuren mit 8 - 22 Kohlenstoffatomen, bevorzugt 18 Kohlenstoffatomen. Diese Fettsäuren lassen sich nach bekannten Verfahren polymerisierten (vgl. DE-OS 14 43 938, DE-OS 14 43 968, DE-PS 21 18 702 und DE-PS 12 80 852).

Typische im Handel erhältliche polymere Fettsäuren haben etwa folgende Zusammensetzung:

| monomere Säuren (Mo) | 5 bis 15 Gew.-% |
| dimere Säuren (Di) | 55 bis 80 Gew.-% |
| trimere Säuren (Tri) | 10 bis 35 Gew.-% |

Der Gehalt an dimerer Säure kann durch allgemein bekannte Destillationsverfahren bis zu 100 Gew.-% erhöht werden.

Die eingesetzte dimere Fettsäure kann auch in hydrierter Form vorliegen.

Bei Verwendung von hydrierter dimerer Fettsäure werden Schmelzkleber mit verbesserter Farbzahl erhalten. Andererseits ist die Verwendung handelsüblicher technischer polymerisierter Fettsäuren zur Herstellung von Schmelzklebern für besondere Zwecke möglich. Bei der Verwendung von technischer dimerer Fettsäure sei nur darauf hingewiesen, daß der Gehalt an trimerer Fettsäure eine maximale Grenze nicht überschreiten sollte. Dieser Grenzwert hängt von dem jeweiligen Gehalt an dimerer und monomerer Fettsäure der polymerisierten Fettsäure ab und kann durch einen orientierenden Versuch, wie er zur handwerklichen Alltagsroutine des Durchschnittsfachmanns gehört, festgestellt werden.

Bevorzugt wird jedoch destillierte dimere Fettsäure mit einem Gehalt an dimerer Fettsäure von 70 - 96 % verwendet.

Die dimeren Fettsäuren werden - bei einem Gesamtsäureäquivalent von 1,0 oder im Bereich von 1,02 bis 1,05 - in Mengen von 0,10 - 0,95, vorzugsweise 0,3 - 0,6 Äquivalente eingesetzt.

Die erfindungsgemäß mitverwendbaren Co-Dicarbonsäuren fallen unter die allgemeine Formel I

$$R^2\text{-OOC-}R^1\text{-COOR}^2 \qquad (I)$$

in welcher $R^1$ ein geradkettiger aliphatischer, ein cycloaliphatischer, aromatischer oder araliphatischer Kohlenwasserstoffrest mit 4 - 11 Kohlenstoffatomen und $R^2$ Wasserstoff oder ein Alkylrest mit 1 - 8 Kohlenstoffatomen sein kann.

Diese Säuren können allein oder in Mischung in Mengen von 0 - 0,85 Äquivalenten, vorzugsweise 0,3 - 0,6 Äquivalenten, bezogen auf ein Gesamtsäureäquivalent von 1,0 oder im Bereich von 1,02 bis 1,05, mitverwendet werden.

Als Beispiele seien genannt: Adipinsäure, Pimelinsäure, Korksäure, Azelainsäure, Sebazinsäure, Dekamethylendicarbonsäure, Brassylsäure, 1,4-Cyclohexandicarbonsäure, Terephthalsäure, Isophthalsäure, Naphthalindicarbonsäure, 1,4-Phenylendiessigsäure. Adipinsäure, Azelainsäure, Sebazinsäure, Dekamethylendicarbonsäure und Terepthalsäure werden erfindungsgemäß bevorzugt.

Die erfindungsgemäß mitverwendete Trimellithsäure bzw. das Trimellithsäureanhydrid sind handelsübliche Produkte und werden in Mengen von 0,05 - 0,5 Äquivalenten, vorzugsweise 0,05 - 0,2 Äquivalenten, bezogen auf ein Gesamtsäureäquivalent von 1,0 oder im Bereich von 1,02 bis 1,05, eingesetzt. Da diese Komponenten als Imidbildner bifunktionell wirken, ist dies auch die Berechnungsgrundlage für die Festlegung der Einsatzmengen.

Als erfindungsgemäß mitzuverwendende Aminkomponente kommen Diamine der allgemeinen Formel (II)

$$H_2N\text{-}R^3\text{-NH}_2 \qquad (II)$$

in welcher $R^3$ ein geradzahliger aliphatischer Kohlenwasserstoffrest mit 2 bis 12 Kohlenstoffatomen, vorzugsweise 2 bis 6 Kohlenstoffatomen bedeutet, in Betracht, wie insbesondere unsubstituierte Amine wie 1,2-Diaminoethan, 1,4-Diaminobutan, 1,6-Diaminohexan, 1,8-Diaminooktan, 1,12-Diaminododekan. Erfindungsgemäß bevorzugt werden 1,2-Diamonoethan und 1,6-Diaminohexan. Diese Amine können allein oder in Mischung in Mengen von 0,4 - 0,7 Äquivalenten, insbesondere 0,5 - 0,6 Äquivalenten, mitverwendet

EP 0 388 638 B1

werden.

Als Hydroxylkomponente werden erfindungsgemäß 1,4-Dihydroxymethyl-cyclohexan und/oder 3(4),8,9-Dihydroxymethyltricyclo[5.2.1.0$^{2,6}$]decan in Mengen von 0,3 bis 0,6 Äquivalenten, vorzugsweise 0,4 - 0,5 Äquivalenten, mitverwendet. Die Summe der Gesamtaminoäquivalente und der Gesamthydroxyläquivalente ergibt hierbei 1,0.

Die Art und Menge der mitverwendeten Amin- und Hydroxylkomponenten ist innerhalb relativ weiter Grenzen variierbar. Unter Anwendung der dem Fachmann auf dem Schmelzklebersektor allgemein bekannten Sachzusammenhänge können z. B. Harze mit den gewünschten Erweichungspunkten, den geforderten Schmelzviskositäten oder den erwünschten Abbindegeschwindigkeiten gezielt hergestellt werden.

Die Summe der Äquivalente der zur Anwendung kommenden Carboxylgruppen gemäß 1. + 2. + 3. ist im wesentlichen gleich der Summe der Amin- und Hydroxylgruppen gemäß 4. + 5., wobei erfindungsgemäß ein geringfügiger Säureüberschuß bevorzugt wird, so daß von den Komponenten 1. + 2. + 3. 1,02 bis 1,05 Äquivalente auf 1,0 Äquivalente der Komponenten 4. + 5. kommen.

Die Kondensation der beschriebenen Komponenten zu den erfindungsgemäßen Polyesteramidimiden erfolgt bei Temperaturen zwischen 200 - 300 °C nach den auf diesem Gebiet allgemein bekannten Verfahren.

Die erfindungsgemäßen Polyesteramidimide können ggf. in Abmischungen mit den auf diesem Gebiet üblichen Zusatz- und Hilfsstoffen wie Streck- und Verlaufsmittel, Farbstoffe, Pigmente, Stabilisatoren und auch verträglichen, nicht zur Schaumbildung neigenden Polymeren oder Copolymeren zum Verkleben bzw. zur Beschichtung von anorganischen und organischen Substraten, wie Metalle, metallische Folien, Glas, Keramik, Papier, Gummi, Leder, Textilien, Kunststoffe wie PVC, ABS, EPDM, und als Vergußmassen eingesetzt werden.

Überprüfung der Schaumbildung

Aus den erfindungsgemäßen Polyamidimiden wurden "Sticks" (Zylinder von 12 mm Durchmesser und 100 mm Länge) durch Eingießen einer blasenfreien Schmelze von 200 °C in die entsprechenden Formkörper aus Teflon ® hergestellt. Nach dem Erkalten und Entformen erfolgte eine offene Lagerung bei 22 ± 2 °C und einer relativen Luftfeuchtigkeit von 50 % über einen Zeitraum von 6 Monaten.

Die Sticks wurden in einer handelsüblichen Stickpistole aufgeschmolzen.

Auswertung: Der geschmolzene Klebstoff ist in blasenfreiem Zustand transparent, so daß Blasen einwandfrei erkennbar sind.

Schaumbildung: Wenn die Anzahl der auftretenden Blasen in der austretenden Schmelzklebstoffraupe so hoch ist, daß von einer "Schaumbildung" gesprochen werden kann.

Keine Schaumbildung: Wenn die Schmelze blasenfrei oder nahezu blasenfrei austritt.

Der Beurteilung wurden jeweils 5 Sticks zugrundegelegt.

Die Vergleichsbeispiele wurden analog obiger Verfahrensweise überprüft.

Die in den nachfolgenden Beispielen verwendeten dimeren Fettsäuren haben die folgende Zusammensetzung (nach Gasliquid-chromatography; GLC)

| Beispiele | polmerisierte Tallölfettsäure | |
|---|---|---|
| für A | monomere Fettsäure | 6,71 % |
| | dimere Fettsäure | 90,25 % |
| | trimere und höherpolymere Fettsäuren | 3,04 % |
| für B | monomere Fettsäure | 10,5 % |
| | dimere Fettsäure | 74,3 % |
| | trimere und höherpolymere Fettsäuren | 15,5 % |

Beispiele

Beispiel 1

In einem mit Rührer, Thermometer und absteigendem Kühler versehenen 1 l-Dreihalskolben wurden unter Stickstoff 400 g dimerisierte Tallölfettsäure (A) (0,95 Äquivalente), 7,1 g Trimellithsäureanhydrid (0,05 Äquivalente), 26,15 g Ethylendiamin (0,588 Äquivalente) und 41,74 g 1,4-Dihydroxymethyl-cyclohexan

4

(0,392 Äquivalente) miteinander vermischt und in 2 h auf 250 °C aufgeheizt.

Diese Temperatur wurde 6 h gehalten, wobei während der letzten 4 h der Druck auf 5 - 7 mbar reduziert wurde. Das erhaltene Polyesteramidimid zeigte einen Ring und Kugel-Erweichungspunkt (DIN 52011) von 88 °C, eine Viskosität (gemessen bei 200 °C mit einem Rotationsviskosimeter der Fa. Haake in Anlehnung an DIN 53019) von 0,52 Pa.s, eine Säurezahl von 7,5 und eine Aminzahl von 1,7.

Beim Wiederaufschmelzen der gelagerten Harze in einer Stickpistole trat keine Schaumbildung auf.

Die in der Tabelle aufgeführten Beispiele wurden in analoger Weise durchgeführt, wobei die Mengen der Komponenten als Äquivalente angegeben sind und die Mengen an Amin- und Hydroxyläquivalenten mit dem Faktor 0,98 multipliziert werden müssen.

Im einzelnen bedeuten:

| | |
|---|---|
| Dfs | = dimere Fettsäure, Beispiel wie angegeben |
| Adps | = Adipinsäure |
| Azls | = Azelainsäure |
| Sebs | = Sebazinsäure |
| $C_{12}$-S | = Dekamethylendicarbonsäure |
| DMT | = Terephthalsäuredimethylester |
| TMA | = Trimellithsäureanhydrid |
| CPTA | = Cyclopentantetracarbonsäuredianhydrid |
| EDA | = Ethylendiamin |
| HDA | = Hexamethylendiamin |
| $C_{12}D$ | = 1,12-Diaminododekan |
| DMCH | = 1,4-Dihydroxymethyl-cyclohexan |
| TCD | = 3(4),8(9)-Dihydroxymethyl-tricyclo[$5.2.1.0^{2,6}$]decan |
| AZ | = Aminzahl |
| SZ | = Säurezahl |
| R + B | = Ring und Kugel Erweichungspunkt |
| Visk/200 °C | = Schmelzviskosität gemessen bei 200 °C in Pa.s |

Tabelle

| Beispiel | Dfs | Co-Dicarbon-säure | TMA | Aminkom-ponente | Hydroxyl-Komponente | Az | Sz | R+B°C | Visk/200°C Pa.s | Schaum-bildung |
|---|---|---|---|---|---|---|---|---|---|---|
| 1 | 0,95 A | – | 0,05 | EDA 0,6 | DMCH 0,4 | 1,7 | 7,5 | 88 | 0,52 | nein |
| 2 | 0,95 A | – | 0,05 | HDA 0,6 | DMCH 0,3 / TCD 0,1 | 0 | 4,5 | 80 | 1,08 | nein |
| 3 | 0,3 A | $C_{12}$–S 0,6 | 0,10 | $C_{12}D$ 0,4 | TCD 0,6 | 0 | 3,3 | 118 | 2,31 | nein |
| 4 | 0,15 B | Adps 0,8 | 0,05 | HDA 0,5 | DMCH 0,5 | 0,6 | 7,2 | 192 | 25,0 | nein |
| 5 | 0,45 A | Adps 0,2 / Sebs 0,3 | 0,05 | HDA 0,5 | DMCH 0,5 | 0 | 8,3 | 132 | 3,5 | nein |
| 6 | 0,45 A | Sebs 0,5 | 0,05 | EDA 0,3 / $C_{12}D$ 0,2 | DMCH 0,5 | 3,4 | 4,1 | 136 | 8,0 | nein |
| 7 | 0,4 A | $C_{12}$–S 0,3 | 0,30 | HDA 0,7 | DMCH 0,3 | 0,4 | 5,4 | 129 | 26,0 | nein |
| 8 | 0,7 A | DMT 0,1 | 0,20 | HDA 0,5 | DMCH 0,5 | 0,8 | 4,3 | 93 | 1,01 | nein |
| 9 | 0,3 A | Sebs 0,2 | 0,50 | HDA 0,7 | DMCH 0,3 | 1,3 | 6,1 | 113 | 29,2 | nein |
| 10 | 0,45 A | AzIS 0,5 | 0,05 | HDA 0,5 | DMCH 0,5 | 0,7 | 7,6 | 138 | 3,2 | nein |
| Vergleichsversuche | | | | | | | | | | |
| 11 | 0,50 A | AzIS 0,5 | – | HDA 0,5 | DMCH 0,5 | 0,8 | 6,1 | 144 | 1,6 | ja |
| 12 | 0,45 A | Sebs 0,5 | 0,05 (CPTA) | HDA 0,5 | DMCH 0,5 | 2,5 | 6,4 | 151 | 7,0 | ja |
| 13 | 0,40 A | $C_{12}$–S 0,3 | 0,30 (CPTA) | HDA 0,7 | DMCH 0,3 | 0 | 6,7 | 128 | 14,3 | ja |
| 14 | 0,45 A | Sebs 0,45 | 0,10 (CPTA) | HDA 0,7 | DMCH 0,3 | 3,4 | 5,7 | 161 | 15,0 | ja |

**Patentansprüche**

**Patentansprüche für folgende Vertragsstaaten : DE, GB, FR, IT, NL, SE, BE**

1. Polyesteramidimide, herstellbar durch Kondensation bei Temperaturen von 200 - 300 ° C nach den auf diesem Gebiet allgemein bekannten Verfahren von

1. 0,1 - 0,95 Äquivalenten polymerisierter Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und

2. 0 - 0,85 Äquivalenten einer Dicarbonsäure der allgemeinen Formel I

$$R^2\text{-OOC-}R^1\text{-COOR}^2 \qquad (I)$$

in welcher $R^1$ ein geradkettiger aliphatischer, ein cycloaliphatischer, aromatischer oder araliphatischer Kohlenwasserstoffrest mit 4 - 11 Kohlenstoffatomen und $R^2$ Wasserstoff oder ein Alkylrest mit 1 - 8 Kohlenstoffatomen sein kann und

3. 0,05 - 0,5 Äquivalenten Trimellithsäureanhydrid und

4. 0,4 bis 0,7 Äquivalenten geradzahliger aliphatischer Diamine mit 2 - 12 Kohlenstoffatomen und

5. 0,3 - 0,6 Äquivalenten 3(4),8(9)-Dihydroxymethyl-tricyclo[5.2.1.0$^{2,6}$]decan und/oder 1,4-Dihydroxymethylcyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist.

2. Polyesteramidimide gemäß Anspruch 1, dadurch gekennzeichnet, daß als Co-Dicarbonsäuren Adipinsäure, Sebazinsäure, Azelainsäure, Dekamethylendicarbonsäure und/oder Terephthalsäure mitverwendet werden.

3. Polyesteramidimide gemäß Anspruch 1, dadurch gekennzeichnet, daß als aliphatische Diamine 1,2-Diaminoethan und/oder 1,6-Diaminohexan und/oder 1,12-Diaminodekan mitverwendet werden.

4. Polyesteramidimide gemäß den Ansprüchen 1 bis 3, dadurch gekennzeichnet, daß 0,3 - 0,6 Äquivalente dimere Fettsäure, 0,3 - 0,6 Äquivalente Co-Dicarbonsäure, 0,05 - 0,2 Äquivalente Trimellithsäureanhydrid, 0,5 - 0,6 Äquivalente der Aminkomponente und 0,4 - 0,5 Äquivalente der Hxdroxylkomponente eingesetzt werden.

5. Verfahren zur Herstellung von Polyesteramidimiden durch Kondensation bei Temperaturen von 200 - 300 °C nach den auf diesem Gebiet allgemein bekannten Verfahren von

1. 0,1 - 0,95 Äquivalenten polymerisierter Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und

2. 0 - 0,85 Äquivalenten einer Dicarbonsäure der allgemeinen Formel I

$$R^2\text{-OOC-}R^1{}^-\text{COOR}^2 \qquad (I)$$

in welcher $R^1$ ein geradkettiger aliphatischer, ein cycloaliphatischer, aromatischer oder araliphatischer Kohlenwasserstoffrest mit 4 - 11 Kohlenstoffatomen und $R^2$ Wasserstoff oder ein Alkylrest mit 1 - 8 Kohlenstoffatomen sein kann und

3. 0,05 - 0,5 Äquivalenten Trimellithsäureanhydrid und

4. 0,4 - 0,7 Äquivalenten geradzahliger aliphatischer Diamine mit 2 - 12 Kohlenstoffatomen und

5. 0,3 - 0,6 Äquivalenten 3(4),8(9)-Dihydroxymethyl-tricyclo[5.2.1.0$^{2,6}$]decan und/oder 1,4-Dihydroxymethylcyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist.

6. Verfahren zur Herstellung von Polyesteramidimiden gemäß Anspruch 5, dadurch gekennzeichnet, daß

1. 0,3 - 0,6 Äquivalente polymerisierte Fettsäure mit Dimergehalten von 55 - 100 %, welche gegebenenfalls hydriert sein kann, und gegebenenfalls

2. 0,3 - 0,6 Äquivalente Adipinsäure, Sebazinsäure, Azelainsäure, Dekamethylendicarbonsäure, Terephthalsäure und

3. 0,05 - 0,2 Äquivalente Trimellithsäureanhydrid und

4. 0,5 - 0,6 Äquivalente 1,2-Diaminoethan, 1,6-Diaminohexan, 1,12- Diaminododekan und

5. 0,4 - 0,5 Äquivalente 3(4),8(9)-Dihydroxymethyltricyclo[5.2.1.0$^{2,6}$]decan und/oder 1,4 Dihydroxymethylcyclohexan

kondensiert werden.

7. Verwendung der Polyesteramidimide, herstellbar durch Kondensation bei Temperaturen von 200 - 300 ° C nach den auf diesem Gebiet allgemein bekannten Verfahren von

1. 0,1 bis 0,95 Äquivalenten polymerisierter Fettsäure, die erhalten wird aus einbasischen aliphatischen Säuren mit 8 - 22 Kohlenstoffatomen mit Dimergehalten, von 55 - 100 %, welche gegebenenfalls hydriert sein kann, und

2. 0 - 0,85 Äquivalenten einer Dicarbonsäure der allgemeinen Formel I

R$^2$-OOC-R$^1$-COOR$^2$     (I)

in welcher R$^1$ ein geradkettiger aliphatischer, ein cycloaliphatischer, aromatischer oder araliphatischer Kohlenwasserstoffrest mit 4 - 11 Kohlenstoffatomen und R$^2$ Wasserstoff oder ein Alkylrest mit 1 - 8 Kohlenstoffatomen sein kann und

3. 0,05 - 0,5 Äquivalenten Trimellithsäureanhydrid und

4. 0,4 - 0,7 Äquivalenten geradzahliger aliphatischer Diamine mit 2 -12 Kohlenstoffatomen und

5. 0,3 - 0,6 Äquivalenten 3(4),8(9)-Dihydroxymethyl-tricyclo[5.2.1.0$^{2,6}$]decan und/oder 1,4 Dihydroxymethylcyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist, als Schmelzkleber zum Verkleben und Beschichten von anorganischen und organischen Substraten und als Vergußmassen.

8. Verwendung der Polyesteramidimide, herstellbar durch Kondensation bei Temperaturen von 200 - 300 ° C nach den auf diesem Gebiet allgemein bekannten Verfahren von

1. 0,3 - 0,6 Äquivalente polymerisierte Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und

2. 0,3 - 0,6 Äquivalente Adipinsäure, Sebazinsäure, Azelainsäure, Dekamethylendicarbonsäure, Terephthalsäure und

3. 0,05 - 0,2 Äquivalente Trimellithsäureanhydrid und

4. 0,4 - 0,6 Äquivalente 1,2-Diaminoethan, 1,6 Diaminohexan, 1,12-Diaminododekan und

5. 0,4 - 0,5 Äquivalente 3(4),8(9)-Dihydroxymethyltricyclo[5.2.1.0$^{2,6}$]decan und/oder 1,4-Dihydroxymethylcyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist, als Schmelzklebstoff zum Verkleben und Beschichten von anorganischen und organischen Substraten und als Vergußmassen.

**Patentansprüche für folgenden Vertragsstaat : ES**

1. Verfahren zur Herstellung von Polyesteramidimiden durch Kondensation von

1. 0,1 - 0,95 Äquivalenten polymerisierter Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und

2. 0 - 0,85 Äquivalenten einer Dicarbonsäure der allgemeinen Formel I

R$^2$-OOC-R$^1$-COOR$^2$     (I)

in welcher R$^1$ ein geradkettiger aliphatischer, ein cycloaliphatischer, aromatischer oder araliphatischer Kohlenwasserstoffrest mit 4 - 11 Kohlenstoffatomen und R$^2$ Wasserstoff oder ein Alkylrest mit 1 - 8 Kohlenstoffatomen sein kann und

3. 0,05 - 0,5 Äquivalenten Trimellithsäureanhydrid und

4. 0,4 bis 0,7 Äquivalenten geradzahliger aliphatischer Diamine mit 2 - 12 Kohlenstoffatomen und

5. 0,3 - 0,6 Äquivalenten 3(4),8(9)-Dihydroxymethyl-tricyclo[5.2.1.0$^{2,6}$]decan und/oder 1,4-Dihydroxymethylcyclohexan,

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 : 1 liegen und die Summe der Äquivalente der Komponenten 4 + 5 gleich 1 ist.

2. Verfahren zur Herstellung von Polyesteramidimiden gemäß Anspruch 1, dadurch gekennzeichnet, daß

1. 0,3 - 0,6 Äquivalente polymerisierte Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und gegebenenfalls

2. 0,3 - 0,6 Äquivalente Adipinsäure, Sebazinsäure, Azelainsäure, Dekamethylendicarbonsäure, Terephthalsäure und

3. 0,05 - 0,2 Äquivalente Trimellithsäureanhydrid und

4. 0,4 - 0,6 Äquivalente 1,2-Diaminoethan, 1,6-Diaminohexan, 1,12-Diaminododekan und

5. 0,4 - 0,5 Äquivalente 3(4),8(9)-Dihydroxymethyl-tricyclo[5.2.1.0$^{2,6}$]decan und/oder 1,4-Dihydroxymethylcyclohexan

kondensiert werden.

3. Verwendung der Polyesteramidimide, herstellbar gemäß Anspruch 1, als Schmelzklebstoff zum Verkleben und Beschichten von anorganischen und organischen Substraten und als Vergußmassen.

4. Verwendung der Polyesteramidimide, herstellbar durch Kondensation bei Temperaturen von 200 - 300 °C nach den auf diesem Gebiet allgemein bekannten Verfahren, von

1. 0,3 - 0,6 Äquivalente polymerisierte Fettsäure, die erhalten wird aus einbasischen aliphatischen Säuren mit 8 - 22 Kohlenstoffatomen, mit Dimergehalten von 55 - 100 %, welche gegebenenfalls hydriert sein kann, und gegebenenfalls

2. 0,3 - 0,6 Äquivalente Adipinsäure, Sebazinsäure, Azelainsäure, Dekamethylendicarbonsäure, Terephthalsäure und

3. 0,05 - 0,2 Äquivalente Trimellithsäureanhydrid und

4. 0,4 - 0,6 Äquivalente 1,2-Diaminoethan, 1,6-Diaminohexan, 1,12-Diaminododekan und

5. 0,4 - 0,5 Äquivalente 3(4),8(9)−Dihydroxymethyl-tricyclo[5.2.1.0$^{2,6}$]decan und/oder 1,4-Dihydroxymethylcyclohexan

worin die Summe der Gesamtaminäquivalente und der Gesamthydroxyläquivalente 1,0 ergibt und wobei die Summe der Äquivalente der Carboxylgruppen zu der Summe der Amin- und Hydroxylgruppen im Verhältnis von 1 : 1 oder im Bereich von 1,02 bis 1,05 liegen und die Summe der Äquivalente der Komponenten 4 + 5 : 1 gleich 1 ist, als Schmelzklebstoff zum Verkleben und Beschichten von anorganischen und organischen Substraten und als Vergußmassen.

## Claims

## Claims for the following Contracting States : BE, DE, GB, FR, IT, NL, SE

1. Polyester amide imides, which can be prepared by the condensation at temperatures of from 200 to 300 °C, in accordance with processes generally known in the art, of

1. from 0.1 to 0.95 equivalent of polymerised fatty acid, which is obtained from monobasic aliphatic acids having from 8 to 22 carbon atoms, has a dimer content of from 55 to 100 %, and may optionally be hydrogenated, and

2. from 0 to 0.85 equivalent of a dicarboxylic acid of the general formula I

$$R^2\text{-OOC-}R^1\text{-COOR}^2 \qquad (I)$$

in which $R^1$ may be a straight-chained aliphatic, a cycloaliphatic, aromatic or araliphatic, hydrocarbon radical having from 4 to 11 carbon atoms, and $R^2$ may be hydrogen or an alkyl radical having from 1 to 8 carbon atoms, and

3. from 0.05 to 0.5 equivalent of trimellitic anhydride and

4. from 0.4 to 0.7 equivalent of an even-numbered aliphatic diamine having from 2 to 12 carbon atoms and

5. from 0.3 to 0.6 equivalent of 3(4),8(9)−dihydroxymethyl−tricyclo[5.2.1.0$^{2,6}$]decane and/or 1,4-dihydroxymethylcyclohexane,

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1.

2. Polyester amide imides according to claim 1, characterised in that the co-dicarboxylic acids co-used are adipic acid, sebacic acid, azelaic acid, decamethylenedicarboxylic acid and/or terephthalic acid.

3. Polyester amide imides according to claim 1, characterised in that the aliphatic diamines co-used are 1,2-diaminoethane and/or 1,6-diaminohexane and/or 1,12-diaminodecane.

4. Polyester amide imides according to any one of claims 1 to 3, characterised in that from 0.3 to 0.6 equivalent of dimeric fatty acid, from 0.3 to 0.6 equivalent of codicarboxylic acid, from 0.05 to 0.2 equivalent of trimellitic anhydride, from 0.5 to 0.6 equivalent of the amine component and from 0.4 to 0.5 equivalent of the hydroxy component are used.

5. Process for the preparation of polyester amide imides by the condensation at temperatures of from 200 to 300°C, in accordance with processes generally known in the art, of

1. from 0.1 to 0.95 equivalent of polymerised fatty acid, which is obtained from monobasic aliphatic acids having from 8 to 22 carbon atoms, has a dimer content of from 55 to 100 %, and may optionally be hydrogenated, and

2. from 0 to 0.85 equivalent of a dicarboxylic acid of the general formula I

$$R^2\text{-OOC-}R^1\text{-COOR}^2 \qquad (I)$$

in which $R^1$ may be a straight-chained aliphatic, a cycloaliphatic, aromatic or araliphatic, hydrocarbon radical having from 4 to 11 carbon atoms, and $R^2$ may be hydrogen or an alkyl radical having from 1 to 8 carbon atoms, and

3. from 0.05 to 0.5 equivalent of trimellitic anhydride and

4. from 0.4 to 0.7 equivalent of an even-numbered aliphatic diamine having from 2 to 12 carbon atoms and

5. from 0.3 to 0.6 equivalent of 3(4),8(9)-dihydroxymethyl−tricyclo[5.2.1.0$^{2,6}$]decane and/or 1,4-dihydroxymethylcyclohexane,

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1.

6. Process for the preparation of polyester amide imides according to claim 5, characterised in that

1. from 0.3 to 0.6 equivalent of polymerised fatty acid having a dimer content of from 55 to 100 %, which may optionally be hydrogenated, and optionally

2. from 0.3 to 0.6 equivalent of adipic acid, sebacic acid, azelaic acid, decamethylenedicarboxylic acid, terephthalic acid and

3. from 0.05 to 0.2 equivalent of trimellitic anhydride and

4. from 0.5 to 0.6 equivalent of 1,2-diaminoethane, 1,6-diaminohexane, 1,12-diaminododecane and

5. from 0.4 to 0.5 equivalent of 3(4),8(9)−dihydroxymethyl−tricyc1o[5.2.1.0$^{2,6}$]decane and/or 1,4-dihydroxymethylcyclohexane

are condensed.

7. The use of polyester amide imides, which can be prepared by the condensation at temperatures of from 200 to 300 °C, in accordance with processes generally known in the art, of

1. from 0.1 to 0.95 equivalent of polymerised fatty acid, which is obtained from monobasic aliphatic acids having from 8 to 22 carbon atoms, has a dimer content of from 55 to 100 %, and may optionally be hydrogenated, and

2. from 0 to 0.85 equivalent of a dicarboxylic acid of the general formula I

$R^2$-OOC-$R^1$-COOR$^2$     (I)

in which $R^1$ may be a straight-chained aliphatic, a cycloaliphatic, aromatic or araliphatic, hydrocarbon radical having from 4 to 11 carbon atoms, and $R^2$ may be hydrogen or an alkyl radical having from 1 to 8 carbon atoms, and

3. from 0.05 to 0.5 equivalent of trimellitic anhydride and

4. from 0.4 to 0.7 equivalent of an even-numbered aliphatic diamine having from 2 to 12 carbon atoms and

5. from 0.3 to 0.6 equivalent of 3(4),8(9)−dihydroxymethyl−tricyclo[5.2.1.0$^{2,6}$]decane and/or 1,4-dihydroxymethylcyclohexane,

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1, as hot-melt adhesives for bonding and coating inorganic and organic substrates and as casting compositions.

8. The use of polyester amide imides, which can be prepared by the condensation at temperatures of from 200 to 300 °C, in accordance with processes generally known in the art, of

1. from 0.3 to 0.6 equivalent of polymerised fatty acid having a dimer content of from 55 to 100 %, which may optionally be hydrogenated, and optionally

2. from 0.3 to 0.6 equivalent of adipic acid, sebacic acid, azelaic acid, decamethylenedicarboxylic acid, terephthalic acid and

3. from 0.05 to 0.2 equivalent of trimellitic anhydride and

4. from 0.5 to 0.6 equivalent of 1,2-diaminoethane, 1,6-diaminohexane, 1,12-diaminododecane and

5. from 0.4 to 0.5 equivalent of 3(4),8(9)-dihydroxymethyl−tricyclo[5.2.1.0$^{2,6}$]decane and/or 1,4-dihydroxymethylcyclohexane

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1, as hot-melt adhesives for bonding and coating inorganic and organic substrates and as casting compositions.

**Claims for the following Contracting State : ES**

1. Process for the preparation of polyester amide imides by the condensation of

1. from 0.1 to 0.95 equivalent of polymerised fatty acid, which is obtained from monobasic aliphatic acids having from 8 to 22 carbon atoms, has a dimer content of from 55 to 100 %, and may optionally be hydrogenated, and

2. from 0 to 0.85 equivalent of a dicarboxylic acid of the general formula I

$R^2$-OOC-$R^1$-COOR$^2$     (I)

in which $R^1$ may be a straight-chained aliphatic, a cycloaliphatic, aromatic or araliphatic, hydrocarbon radical having from 4 to 11 carbon atoms, and $R^2$ may be hydrogen or an alkyl radical having from 1 to 8 carbon atoms, and

3. from 0.05 to 0.5 equivalent of trimellitic anhydride and

4. from 0.4 to 0.7 equivalent of an even-numbered aliphatic diamine having from 2 to 12 carbon atoms and

5. from 0.3 to 0.6 equivalent of 3(4),8(9)-dihydroxymethyl-tricyclo[5.2.1.0$^{2,6}$]decane and/or 1,4-dihydroxymethylcyclohexane,

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1.

2. Process for the preparation of polyester amide imides according to claim 1, characterised in that

1. from 0.3 to 0.6 equivalent of polymerised fatty acid, which is obtained from monobasic aliphatic acids having from 8 to 22 carbon atoms, has a dimer content of from 55 to 100 %, and may optionally be hydrogenated, and optionally

2. from 0.3 to 0.6 equivalent of adipic acid, sebacic acid, azelaic acid, decamethylenedicarboxylic acid, terephthalic acid and

3. from 0.05 to 0.2 equivalent of trimellitic anhydride and

4. from 0.4 to 0.6 equivalent of 1,2−diaminoethane, 1,6-diaminohexane, 1,12−diaminododecane and

5. from 0.4 to 0.5 equivalent of 3(4),8(9)−dihydroxymethyl−tricyclo[5.2.1.0$^{2,6}$]decane and/or 1,4-dihydroxymethylcyclohexane

are condensed.

3. The use of the polyester amide imides which can be prepared according to claim 1 as hot-melt adhesives for bonding and coating inorganic and organic substrates and as casting compositions.

4. The use of polyester amide imides, which can be prepared by the condensation at temperatures of from 200 to 300 ° C, in accordance with processes generally known in the art, of

1. from 0.3 to 0.6 equivalent of polymerised fatty acid which is obtained from monobasic aliphatic acids having from 8 to 22 carbon atoms, has a dimer content of from 55 to 100 %, and may optionally be hydrogenated, and optionally

2. from 0.3 to 0.6 equivalent of adipic acid, sebacic acid, azelaic acid, decamethylenedicarboxylic acid, terephthalic acid and

3. from 0.05 to 0.2 equivalent of trimellitic anhydride and

4. from 0.4 to 0.6 equivalent of 1,2-diaminoethane, 1,6-diaminohexane, 1,12-diaminododecane and

5. from 0.4 to 0.5 equivalent of 3(4),8(9)-dihydroxymethyl−tricyclo[5.2.1.0$^{2,6}$]decane and/or 1,4-dihydroxymethylcyclohexane

wherein the sum of the total amino equivalents and the total hydroxy equivalents is 1.0 and wherein the ratio of the sum of the equivalents of the carboxy groups to the sum of the amino and hydroxy groups is 1:1 or in the range of from 1.02 to 1.05 : 1, and the sum of the equivalents of components 4 + 5 is 1, as hot-melt adhesives for bonding and coating inorganic and organic substrates and as casting compositions.

**Revendications**

**Revendications pour les Etats contractants suivants : BE, DE, GB, FR, IT, NL, SE**

1. Polyesteramide−imides pouvant être préparés par condensation à des températures de 200 à 300 ° C, par des procédés généralement connus dans ce domaine,

1. de 0,1 à 0,95 équivalent d'un acide gras polymérisé, que l'on obtient à partir de monoacides aliphatiques ayant de 8 à 22 atomes de carbone, avec une teneur en dimère de 55 à 100 %, pouvant être éventuellement hydrogéné,

2. de 0 à 0,85 équivalent d'un acide dicarboxylique de formule générale I

$$R^2\text{-OOC-}R^1\text{-COO}R^2 \qquad (I)$$

dans laquelle R$^1$ peut être un résidu hydrocarboné aliphatique, cycloaliphatique, aromatique ou araliphatique à chaîne droite ayant de 4 à 11 atomes de carbone ou un radical alkyle ayant de 1 à 8 atomes de carbone, et

3. de 0,05 à 0,5 équivalent d'anhydride trimellitique, et

4. de 0,4 à 0,7 équivalent de diamines aliphatiques paires ayant de 2 à 12 atomes de carbone, et

5. de 0,3 à 0,6 équivalent de 3(4),8(9)-dihydroxyméthyl-tricyclo[5.2.1.0$^{2,6}$]décane et/ou de 1,4-dihydroxyméthyl-cyclohexane,

la somme des équivalents totaux d'amine et des équivalents totaux d'hydroxyle étant de 1,0, la somme des équivalents des groupes carboxyle faisant avec la somme des groupes amine et hydroxyle un rapport de 1:1 ou compris dans l'intervalle de 1,02 à 1,05:1, la somme des équivalents des constituants 4 + 5 étant égale à 1.

2. Polyesteramide-imides selon la revendication 1, caractérisés en ce qu'on utilise comme co-acides dicarboxyliques l'acide adipique, l'acide sébacique, l'acide azélaïque, l'acide décaméthylènedicarboxylique et/ou l'acide téréphtalique.

3. Polyesteramide-imides selon la revendication 1, caractérisés en ce qu'on utilise comme diamines aliphatiques le 1,2-diaminoéthane et/ou le 1,6-diaminohexane et/ou le 1,12-diaminodécane.

4. Polyesteramide-imides selon les revendications 1 à 3, caractérisés en ce qu'on utilise 0,3 à 0,6 équivalent d'acide gras dimère, 0,3 à 0,6 équivalent de co-acide dicarboxylique, 0,05 à 0,2 équivalent d'anhydride trimellitique, 0,5 à 0,6 équivalent du constituant amine et 0,4 à 0,5 équivalent du constituant hydroxyle.

5. Procédé pour préparer des polyesteramide-imides par condensation à des températures de 200 à 300°C, par des procédés généralement connus dans ce domaine,
   1. de 0,1 à 0,95 équivalent d'un acide gras polymérisé, que l'on obtient à partir de monoacides aliphatiques ayant de 8 à 22 atomes de carbone, avec une teneur en dimère de 55 à 100 %, pouvant être éventuellement hydrogéné,
   2. de 0 à 0,85 équivalent d'un acide dicarboxylique de formule générale I

   $R^2$-OOC-$R^1$-COO$R^2$      (I)

   dans laquelle $R^1$ peut être un résidu hydrocarboné aliphatique, cycloaliphatique, aromatique ou araliphatique à chaîne droite ayant de 4 à 11 atomes de carbone ou un radical alkyle ayant de 1 à 8 atomes de carbone, et
   3. de 0,05 à 0,5 équivalent d'anhydride trimellitique, et
   4. de 0,4 à 0,7 équivalent de diamines aliphatiques paires ayant de 2 à 12 atomes de carbone, et
   5. de 0,3 à 0,6 équivalent de 3(4),8(9)-dihydroxyméthyl-tricyclo[5.2.1.0$^{2,6}$]décane et/ou de 1,4-dihydroxyméthyl-cyclohexane,
   la somme des équivalents totaux d'amine et des équivalents totaux d'hydroxyle étant de 1,0, la somme des équivalents des groupes carboxyle faisant avec la somme des groupes amine et hydroxyle un rapport de 1:1 ou compris dans l'intervalle de 1,02 à 1,05:1, la somme des équivalents des constituants 4 + 5 étant égale à 1.

6. Procédé pour préparer des polyesteramide-imides selon la revendication 5, caractérisé en ce qu'il consiste à condenser
   1. de 0,3 à 0,6 équivalent d'un acide gras polymérisé ayant une teneur en dimère de 55 à 100 %, pouvant être éventuellement hydrogénés, et éventuellement
   2. de 0,3 à 0,6 équivalent d'acide adipique, d'acide sébacique, d acide azélaïque, d' acide décaméthylènedicarboxylique, d'acide téréphtalique, et
   3. de 0,05 à 0,2 équivalent d'anhydride trimellitique, et
   4. de 0,5 à 0,6 équivalent de 1,2-diaminoéthane, 1,6-diaminohexane, 1,12-diaminododécane, et
   5. de 0,4 à 0,5 équivalent de 3(4),8(9)−dihydroxyméthyl-tricyclo[5.2.1.0$^{2,6}$]décane et/ou de 1,4-dihydroxyméthyl-cyclohexane.

7. Utilisation des polyesteramide-imides pouvant être préparés par condensation à des températures de 200 à 300°C par des procédés généralement connus dans ce domaine,
   1. de 0,1 à 0,95 équivalent d'un acide gras polymérisé, que l'on obtient à partir de monoacides aliphatiques ayant de 8 à 22 atomes de carbone, avec une teneur en dimère de 55 à 100 %, pouvant être éventuellement hydrogéné,
   2. de 0 à 0,85 équivalent d'un acide dicarboxylique de formule générale I

   $R^2$-OOC-$R^1$-COO$R^2$      (I)

   dans laquelle $R^1$ peut être un résidu hydrocarboné aliphatique, cycloaliphatique, aromatique ou araliphatique à chaîne droite ayant de 4 à 11 atomes de carbone ou un radical alkyle ayant de 1 à 8 atomes de carbone, et
   3. de 0,05 à 0,5 équivalent d'anhydride trimellitique, et
   4. de 0,4 à 0,7 équivalent de diamines aliphatiques paires ayant de 2 à 12 atomes de carbone, et
   5. de 0,3 à 0,6 équivalent de 3(4),8(9)-dihydroxyméthyl−tricyclo[5.2.1.0$^{2,6}$]décane et/ou de 1,4-dihydroxyméthyl−cyclohexane,
   la somme des équivalents totaux d amine et des équivalents totaux d'hydroxyle étant de 1,0, la somme des équivalents des groupes carboxyle faisant avec la somme des groupes amine et hydroxyle un rapport de 1:1 ou compris dans l'intervalle de 1,02 à 1,05:1, la somme des équivalents des constituants 4 + 5 étant égale à 1, comme adhésifs fusibles pour coller et revêtir des substrats minéraux et organiques, et comme masses de remplissage.

**8.** Utilisation des polyesteramide-imides pouvant être préparés par condensation, à des températures de 200 à 300 ° C, par des procédés généralement connus dans ce domaine,

    1. de 0,3 à 0,6 équivalent d'un acide gras polymérisé, que l'on obtient à partir de monoacides aliphatiques ayant de 8 à 22 atomes de carbone, avec une teneur en dimère de 55 à 100 % et pouvant être éventuellement hydrogénés, et

    2. de 0,3 à 0,6 équivalent d'acide adipique, d'acide sébacique, d'acide azélaïque, d'acide décaméthylènedicarboxylique, d'acide téréphtalique, et

    3. de 0,05 à 0,2 équivalent d'anhydride trimellitique, et

    4. de 0,4 à 0,6 équivalent de 1,2-diaminoéthane, 1,6-diaminohexane, 1,12-diaminododécane, et

    5. de 0,4 à 0,5 équivalent de $3(4),8(9)$-dihydroxyméthyl$-$tricyclo$[5.2.1.0^{2,6}]$décane et/ou de 1,4-dihydroxyméthyl-cyclohexane,

la somme des équivalents totaux d'amine et des équivalents totaux d'hydroxyle étant de 1,0, la somme des équivalents des groupes carboxyle faisant avec la somme des groupes amine et hydroxyle un rapport de 1:1 ou étant compris entre 1,02 et 1,05:1, la somme des équivalents des constituants 4 + 5 étant égale à 1, comme adhésifs fusibles pour coller et revêtir des substrats minéraux et organiques, et comme masses de remplissage.

**Revendications pour l'Etat contractant suivant : ES**

**1.** Procédé pour préparer des polyesteramide-imides par condensation

    1. de 0,1 à 0,95 équivalent d'un acide gras polymérisé, que l'on obtient à partir de monoacides aliphatiques ayant de 8 à 22 atomes de carbone, avec une teneur en dimère de 55 à 100 % pouvant être éventuellement hydrogéné,

    2. de 0 à 0,85 équivalent d'un acide dicarboxylique de formule générale I

$R^2$-OOC-$R^1$-COOR$^2$    (I)

dans laquelle $R^1$ peut être un résidu hydrocarboné aliphatique, cycloaliphatique, aromatique ou araliphatique à chaîne droite ayant de 4 à 11 atomes de carbone ou un radical alkyle ayant de 1 à 8 atomes de carbone, et

    3. de 0,05 à 0,5 équivalent d'anhydride trimellitique, et

    4. de 0,4 à 0,7 équivalent de diamines aliphatiques paires ayant de 2 à 12 atomes de carbone, et

    5. de 0,3 à 0,6 équivalent de $3(4),8(9)$-dihydroxyméthyl-tricyclo$[5.2.1.0^{2,6}]$décane et/ou de 1,4-dihydroxyméthyl-cyclohexane,

la somme des équivalents totaux d'amine et des équivalents totaux d'hydroxyle étant de 1,0, la somme des équivalents des groupes carboxyle faisant avec la somme des groupes amine et hydroxyle un rapport de 1:1 ou compris dans l'intervalle de 1,02 à 1,05:1, la somme des équivalents des constituants 4 + 5 étant égale à 1.

**2.** Procédé pour préparer des polyesteramide-imides selon la revendication 1, caractérisé en ce qu'on condense

    1. de 0,3 à 0,6 équivalent d'un acide gras polymérisé que l'on obtient à partir d'acides aliphatiques monobasiques comportant de 8 à 22 atomes de carbone ayant une teneur en dimère de 55 à 100 %, pouvant être éventuellement hydrogénés, et éventuellement

    2. de 0,3 à 0,6 équivalent d acide adipique, d acide sébacique, d'acide azélaïque, d'acide décaméthylènedicarboxylique, d'acide téréphtalique, et

    3. de 0,05 à 0,2 équivalent d'anhydride trimellitique, et

    4. de 0,4 à 0,6 équivalent de 1,2-diaminoéthane, 1,6-diaminohexane, 1,12-diaminododécane, et

    5. de 0,4 à 0,5 équivalent de $3(4),8(9)$-dihydroxyméthyl$-$tricyclo$[5.2.1.0^{2,6}]$décane et/ou de 1,4-dihydroxyméthyl-cyclohexane.

**3.** Utilisation des polyesteramide$-$imides pouvant être préparés selon la revendication 1, comme adhésif fusible pour coller et revêtir des substrats organiques et minéraux, et comme masses de remplissage.

**4.** Utilisation des polyesteramide-imides pouvant être préparés par condensation, à des températures de 200 à 300°C, par des procédés généralement connus dans ce domaine,

1. de 0,3 à 0,6 équivalent d'un acide gras polymérisé, que l'on obtient à partir de monoacides aliphatiques ayant de 8 à 22 atomes de carbone, avec une teneur en dimère de 55 à 100 % et pouvant être éventuellement hydrogénés, et

2. de 0,3 à 0,6 équivalent d'acide adipique, d'acide sébacique, d'acide azélaïque, d'acide décaméthylènedicarboxylique, d'acide téréphtalique, et

3. de 0,05 à 0,2 équivalent d'anhydride trimellitique, et

4. de 0, 4 à 0,6 équivalent de 1,2-diaminoéthane, 1,6-diaminohexane, 1,12-diaminododécane, et

5. de 0,4 à 0,5 équivalent de 3(4),8(9)-dihydroxyméthyl-tricyclo[5.2.1.0$^{2,6}$]décane et/ou de 1,4-dihydroxyméthyl-cyclohexane,

la somme des équivalents totaux d'amine et des équivalents totaux d'hydroxyle étant de 1,0, la somme des équivalents des groupes carboxyle faisant avec la somme des groupes amine et hydroxyle un rapport de 1:1 ou compris dans l'intervalle de 1,02 à 1,05:1, la somme des équivalents des constituants 4 + 5 étant égale à 1, comme adhésifs fusibles pour coller et revêtir des substrats minéraux et organiques, et comme masses de remplissage.